(19) Europäisches Patentamt
European Patent Office
Office européen des brevets

(11) Veröffentlichungsnummer: **0 268 154 A2**

(12) **EUROPÄISCHE PATENTANMELDUNG**

(21) Anmeldenummer: **87116298.8**

(22) Anmeldetag: **05.11.87**

(51) Int. Cl.⁴: **C09B 31/16**, D06P 1/18, C09K 19/60

Ein Antrag gemäss Regel 88 EPÜ auf Berichtigung der ursprünglich eingereichten Beschreibung Seite 5 + 7 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **15.11.86 DE 3639156**

(43) Veröffentlichungstag der Anmeldung: **25.05.88 Patentblatt 88/21**

(84) Benannte Vertragsstaaten: **CH DE FR GB IT LI**

(71) Anmelder: **BASF Aktiengesellschaft**
**Carl-Bosch-Strasse 38**
**D-6700 Ludwigshafen(DE)**

(72) Erfinder: **Etzbach, Karl-Heinz, Dr.**
**Carl-Bosch-Ring 55**
**D-6710 Frankenthal(DE)**

(54) **Trisazofarbstoffe.**

(57) Die Erfindung betrifft Trisazofarbstoffe der Formel

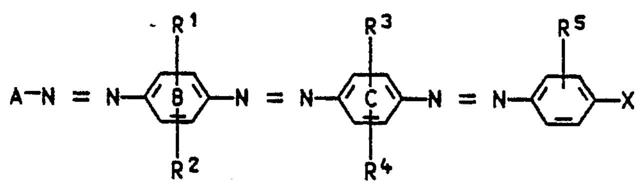

in der A, $R^1$, $R^2$, $R^3$, $R^4$, $R^5$, X und die Ringe B und C jeweils die in der Beschreibung genannte Bedeutung besitzen, und ihre Verwendung in flüssigkristallinen Medien sowie zum Färben von synthetischen Polymeren.

EP 0 268 154 A2

## Trisazofarbstoffe

Die vorliegende Erfindung betrifft neue Trisazofarbstoffe sowie ihre Verwendung in flüssigkristallinen Medien und zum Färben von synthetischen Polymeren oder Fasern.

Flüssigkristalline Materialien, welche pleochroitische Farbstoffe enthalten, finden Verwendung in Displays. Die Grundlagen der erfindungsgemäßen Verwendung sind bekannt und z. B. in H. Kelker und R. Hatz, Handbook of Liquid Crystals S. 611 ff (1980), R. J. Cox, Mol. Cryst. Liq. Cryst. Vol. 55, S. 51 ff (1979), L. Pauls und G. Schwarz, Elektronik 14, S. 66 ff (1982) beschrieben. Weitere Literaturangaben, welche die erfindungsgemäße Verwendung detailliert beschreiben, finden sich in den genannten Veröffentlichungen.

Farbstoffe für Flüssigkristallmischungen müssen mehrere Anforderungen erfüllen (siehe z. B. J. Constant et. al., J. Phys. D: Appl. Phys. Vol. 11, S. 479 ff (1978), F. Jones und T. J. Reeve, Mol. Cryst. Liq. Cryst. Vol. 60, S. 99 ff (1980), EP-A-43 904, EP-A-55 838, EP-A-65 869). Sie dürfen im elektrischen Feld nicht ionisieren und müssen einen möglichst hohen molaren Extinktionskoeffizienten $\epsilon$ und eine gute Löslichkeit in der verwendeten Flüssigkristallmatrix besitzen. Weiterhin sollen sie chemisch und insbesondere photochemisch stabil sein und zur Erzielung eines guten Kontrastes des "Guest-Host"-Displays einen Ordnungsgrad S, der möglichst größer als 0,75 ist, in der jeweiligen nematischen Phase aufweisen.

Farbstoffe, die allen diesen Anforderungen gerecht werden, finden sich überwiegend in der Klasse der Anthrachinone (siehe z. B. EP-A-56 492, EP-A-91 225, DE-A-3 028 593, EP-A-54 217 oder DE-A-2 902 177).

Bisher bekannte Azofarbstoffe haben in der Regel den Nachteil, daß die Lichtstabilität und/oder die Löslichkeit nicht den hohen Anforderungen entsprechen [siehe z. B. G. W. Gray, Chimia 34, S. 47 ff (1980)]

Symmetrisch aufgebaute dichroitische Trisazofarbstoffe mit hohem Ordnungsgrad sind bekannt und z. B. in der DE-A-3 342 040 beschrieben.

Es besteht jedoch nach wie vor das Bedürfnis, die Lichtechtheit und insbesondere die Löslichkeit in den heutzutage verwendeten niederviskosen und zunehmend unpolaren Flüssigkristallmischungen, wie ZLI 2452, ZLI 2585, ZLI 2806 oder ZLI 2903 der Fa. Merck, zu verbessern.

Aufgabe der Erfindung war es nun, gelbe, orange und rote Trisazofarbstoffe bereitzustellen, die in den handelsüblichen Flüssigkristallmischungen bei einem hohen Ordnungsgrad eine sehr gute Löslichkeit und Lichtstabilität aufweisen.

Es wurden Trisazofarbstoffe der Formel I

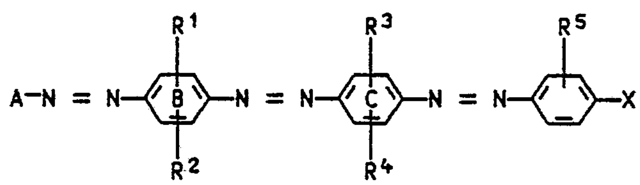

(I)

gefunden, in der

$R^1$, $R^2$, $R^3$ und $R^4$ gleich oder verschieden sind und jeweils unabhängig voneinander Wasserstoff, Methyl, Ethyl, Methoxy oder Chlor,

$R^5$ $C_2$-$C_4$-Alkyl,

X $C_1$-$C_{24}$-Mono-oder Dialkylamino, Monobenzylamino, Mono(phenylethyl)amino, Monophenylamino, N-($C_1$-$C_{12}$-Alkyl)-N-benzylamino, N-($C_1$-$C_{12}$-Alkyl)-N-(phenylethyl)amino oder N-($C_1$-$C_{12}$-Alkyl)-N-phenylamino, wobei die Phenylgruppen jeweils durch $C_1$-$C_{12}$-Alkyl, Cyclohexyl, 4-($C_1$-$C_{12}$-Alkyl)-cyclohexyl, $C_1$-$C_{24}$-Alkyloxy, Phenoxy oder $C_1$-$C_{24}$-Alkanoyloxy substituiert sein können, oder den Rest OR, wobei R für $C_1$-$C_{24}$-Alkyl, gegebenenfalls jeweils durch $C_1$-$C_{12}$-Alkyl, Cyclohexyl, 4-($C_1$-$C_{12}$-Alkyl)-cyclohexyl, $C_1$-$C_{24}$-Alkoxy, Phenoxy oder $C_1$-$C_{24}$-Alkanoyloxy substituiertes Benzyl oder Phenylethyl steht, und

A einen Rest der Formel

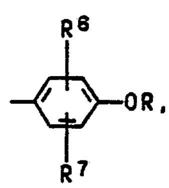
,
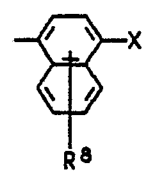
oder
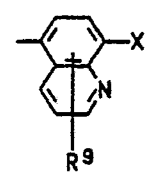
,

bedeuten, wobei R und X jeweils die obengenannte Bedeutung besitzen und
$R^6$ für Wasserstoff oder $C_1$-$C_4$-Alkyl,
$R^7$ für Wasserstoff, Methyl, Ethyl, Methoxy oder Chlor,
$R^8$ für Wasserstoff, Methyl, Hydroxy oder $C_1$-$C_8$-Alkoxy und
$R^9$ für Wasserstoff oder Methyl stehen, und die Ringe B und/oder C auch benzoanelliert sein können.

Die Aufgabe wird mit den erfindungsgemäßen Trisazoverbindungen gelöst, die mindestens eine laterale Ethyl-, Propyl-oder Butylgruppe aufweisen. Überraschenderweise wurde gefunden, daß durch die Einführung dieser lateralen Gruppen die Löslichkeit der Trisazofarbstoffe in handelsüblichen Flüssigkristallmischungen im Vergleich zu lateralem Methyl, Methoxy oder Chlor drastisch ansteigt und der Ordnungsgrad nahezu unverändert bleibt. (Siehe dazu auch G. W. Gray in Chimia 34, S. 53 (1980) oder F. Jones u. T.J. Reeve in J.SDC 1979, S. 356).

Zudem besitzen die erfindungsgemäßen Trisazofarbstoffe in handelsüblichen Flüssigkristallmischungen eine hervorragende Lichtstabilität.

Bevorzugt sind Trisazofarbstoffe der Formel I, i der A einen Rest der Formel

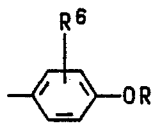 , 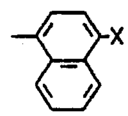 oder 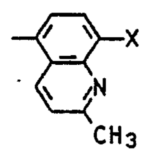

bedeutet, wobei R, $R^6$ und X jeweils die obengenannte Bedeutung besitzen.

Weiterhin bevorzugt sind Trisazofarbstoffe der Formel I, in der R $C_4$-$C_{12}$-Alkyl, Benzyl oder durch $C_4$-$C_{12}$-Alkyl, Cyclohexyl, 4-($C_1$-$C_{12}$-Alkyl)-cyclohexyl oder $C_4$-$C_{12}$-Alkodxy substituiertes Benzyl bedeutet.

Weiterhin bevorzugt sind Trisazofarbstoffe der Formel I, in der $R^1$, $R^2$, $R^3$, $R^4$ und $R^7$ jeweils Wasserstoff bedeuten.

Weiterhin bevorzugt sind Trisazofarbstoffe der Formel I, in der Ring B oder C benzoanelliert ist.

Weiterhin bevorzugt sind Trisazofarbstoffe der Formel I, in der $R^5$ Ethyl bedeutet.

Weiterhin bevorzugt sind Trisazofarbstoffe der Formel I, in der $R^6$ Methyl oder Ethyl bedeutet.

Weiterhin bevorzugt sind Trisazofarbstoffe der Formel I, in der X $C_4$-$C_{12}$-Alkoxy, Benzyloxy, durch $C_4$-$C_{12}$-Alkyl, Cyclohexyl, 4-($C_1$-$C_{12}$-Alkyl)-cyclohexyl oder $C_4$-$C_{12}$-Alkoxy substituiertes Benzyloxy, $C_4$-$C_{12}$-Alkylamino oder gegebenenfalls durch $C_4$-$C_{12}$-Alkyl, Cyclohexyl, 4-($C_1$-$C_{12}$-Alkyl)-cyclohexyl oder $C_4$-$C_{12}$-Alkoxy substituiertes Benzylamino bedeutet.

Besonders bevorzugt sind Trisazofarbstoffe der Formeln Ia, Ib, Ic, Id, Ie und If

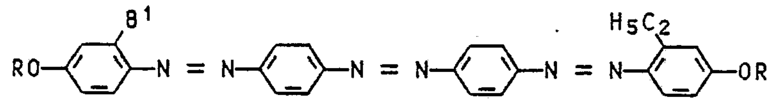
(Ia)

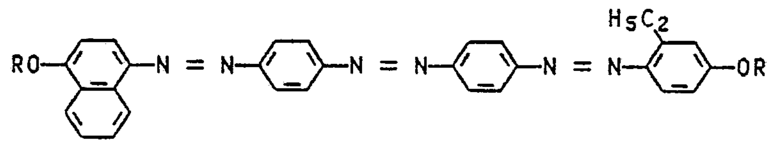
(Ib)

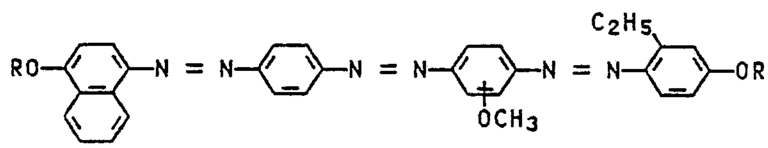
(Ic)

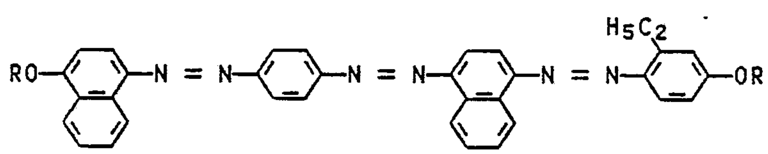
(Id)

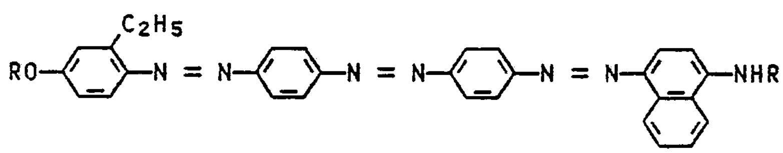
(Ie)

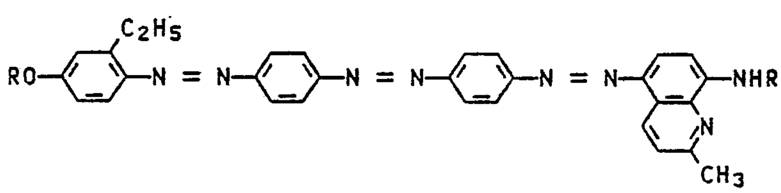
(If)

wobei die Reste R in den einzelnen Formeln gleich oder vorzugsweise verschieden sind und jeweils unabhängig voneinander für $C_4$-$C_{12}$-Alkyl, Benzyl oder durch $C_4$-$C_{12}$-Alkyl, Cyclohexyl, 4-($C_4$-$C_{12}$-Alkyl)-cyclohexyl oder $C_4$-$C_{12}$-Alkoxy substituiertes Benzyl stehen und $B^1$ Methyl oder Ethyl bedeutet.

Einzelne Reste R sind beispielsweise:

n-$C_4H_9$, -$CH_2$-$CH(CH_3)_2$, -$C(CH_3,)_3$, n-$C_5H_{11}$, -$CH_2$-$CH(CH_3)C_2H_5$, n-$C_6H_{13}$, -$CH(CH_3)C_4H_9$, n-$C_7H_{15}$, -$CH(CH_3)C_5H_{11}$, n-$C_8H_{17}$, -$CH_2$-$CH(C_2H_5)C_4H_9$, -$CH_2$-$C(CH_3)_2$-$CH_2$-$C(CH_3)_2$, -$CH(CH_3)C_6H_{13}$, -$CH(C_2H_5)C_5H_{11}$, n-$C_9H_{19}$, -$CH(CH_3)$-$C_7H_{15}$, -$CH(C_2H_5)C_6H_{13}$, -$CH(C_3H_7)C_5H_{11}$, -$CH(C_4H_9)_2$, n-$C_{10}H_{21}$, -$CH(CH_3)C_8H_{17}$, -$CH(C_2H_5)C_7H_{15}$ -$CH(C_3H_7)C_6H_{13}$, n-$C_{11}H_{23}$, -$CH(CH_3)C_9H_{19}$, -n-$C_{12}H_{25}$, -$CH(CH_3)C_{10}H_{21}$, Benzyl, 4-n-Butylbenzyl, 4-n-Pentylbenzyl, 4-n-Hexylbenzyl, 4-n-Heptylbenzyl, 4-n-Octylbenzyl, 4-n-Nonylbenzyl, 4-n-Decylbenzyl, 4-n-Undecylbenzyl, 4-n-Dodecylbenzyl, 4-Cyclohexylbenzyl, 4-(4'-n-Propylcyclohexyl)-benzyl, 4-(4'-n-Butylcyclohexyl)-benzyl, 4-(4'-n-Pentylcyclohexyl)-benzyl, 4-(4'-n-Hexylcyclohexyl)-benzyl, 4-(4'-n-Heptylcyclohexyl)-benzyl, 4-n-Butyloxybenzyl, 4-n-Pentyloxybenzyl, 4-n-Hexyloxy-benzyl, 4-(Hexyl-2-oxy)-benzyl, 4-n-Octylbenzyl, 4-(Octyl-2-ocy)-benzyl oder 4-(2-Ethylhexyl-1-oxy)-benzyl.

Weiterhin besonders bevorzugt sind Trisazofarbstoffe der Formeln Ia, Ib, Ic und Id, bei denen die Reste R in den einzelnen Formeln verschieden sind und der eine Benzyl und der andere $C_4$-$C_{12}$-Alkyl bedeutet.

Zur Herstellung der Trisazofarbstoffe der Formel I kann man Azofarbstoffe der Formel II

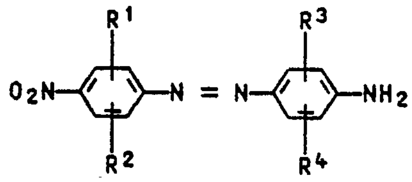 (II),

in der $R^1$, $R^2$, $R^3$ und $R^4$ jeweils die obengenannte Bedeutung besitzen, diazotieren und dann mit Kupplungskomponenten der Formel III

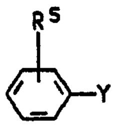 (III),

in der $R^5$ die obengenannte Bedeutung besitzt und Y Hydroxy, $C_1$-$C_{24}$-Mono-oder Dialkylamino, Monobenzylamino, Mono(phenylethyl)amino, Monophenylamino, N-($C_1$-$C_{12}$-Alkyl)-N-benzylamino, N-($C_1$-$C_{12}$-Alkyl)-N-(phenylethyl)amino oder N-($C_1$-$C_{12}$-Alkyl)-N-phenylamino, wobei die Phenylgruppen jeweils durch $C_1$-$C_{12}$-Alkyl, Cyclohexyl, 4-($C_1$-$C_{12}$-Alkyl)cyclohexyl, $C_1$-$C_{24}$-Alkoxy, Phenoxy oder $C_1$-$C_{24}$-Alkanoyloxy substituiert sein können, bedeutet, zu Verbindungen der Formel IV

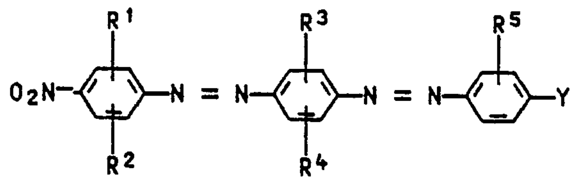 (IV)

umsetzen wobei $R^1$, $R^2$, $R^3$, $R^4$, $R^5$ und Y jeweils die obengenannte Bedeutung besitzen.

Wenn Y Hydroxy bedeutet, können die Verbindungen der Formel IV nach bekannten Methoden in die substituierten Hydroxyverbindungen übergeführt werden.

Die Nitroverbindungen der Formel IV können z. B. mit Natriumsulfid zu den entsprechenden Aminoverbindungen reduziert werden, die dann erneut diazotiert und mit Kupplungskomponenten der Formel

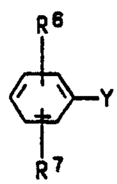 , 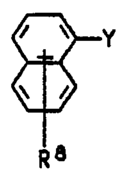 oder 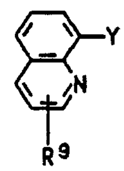 ,

wobei $R^6$, $R^7$, $R^8$ und Y jeweils die obengenannte Bedeutung besitzen, zu Trisazofarbstoffen der Formel I umgesetzt werden. Die Überführung der Farbstoffe, in denen Y Hydroxy bedeutet, in diejenigen erfindungsgemäßen Trisazofarbstoffe der Formel I, in der Y den Rest OR bedeutet, erfolgt wiederum nach bekannten Methoden.

Die Reinigung der neuen Trisazofarbstoffe kann durch Chromatographie über Kieselgel z.B. mit Toluol/Essigester-Gemischen oder Methylenchlorid als Laufmittel durchgeführt werden. Anschließend werden die Farbstoffe z. B. aus Toluol umkristallisiert. Die Reinheitskontrolle erfolgt vorzugsweise durch Dünnschichtchromatographie, HPLC und Elementaranalyse.

Die folgenden Beispiele sollen die Erfindung näher erläutern. (Eine repräsentative Herstellungsmethode für die Farbstoffe der Formel I ist dabei in dem folgenden Beispiel 1 beschrieben.) Die Angaben über Prozente beziehen sich, sofern nicht anders vermerkt, auf das Gewicht.

Beispiel 1

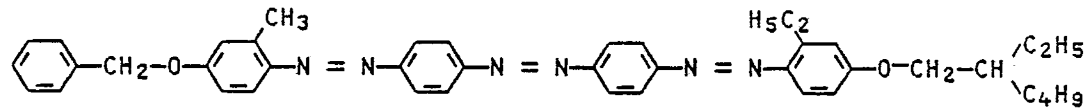

Zu einem Gemisch aus 124 g 4-Amino-4'-nitro-azobenzol und 1000 ml Wasser wurden bei 5°C zunächst 150 g einer 23 %igen Natriumnitritlösung und dann 50 g konz. Salzsäure gegeben. Die Mischung wurde anschließend 5 Stunden bei 5°C gerührt, dann mit 5 g Aktivkohle versetzt und abfiltriert. Das Filtrat wurde unter Eiskühlung zu einer Lösung von 54 g m-Kresol, 20 g Natronlauge und 500 ml Wasser gegeben, hierbei wurde der pH-Wert der Lösung durch Zugabe von verdünnter Natronlauge bei pH 7 gehalten. Die Mischung wurde noch 1 Stunde bei Raumtemperatur gerührt, dann wurde der entstandene Farbstoff abgesaugt, mit Wasser gewaschen und getrocknet. Man erhielt 170 g (94 % d.Th.) Disazofarbstoff der Formel

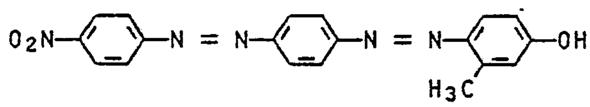

Schmp.: 272°C.

Eine Mischung aus 72,2 g dieses Disazofarbstoffs, 34,2 g Benzylbromid, 27,6 g Kaliumcarbonat und 400 ml N,N-Dimethylformamid wurde 3 Stunden bei 100°C gerührt, der entstandene Niederschlag kalt abgesaugt, mit wenig N,N-Dimethylformamid, dann mit Wasser gewaschen und getrocknet. Man erhielt 56 g (62 % d. Th.) des alkylierten Farbstoffs der Formel

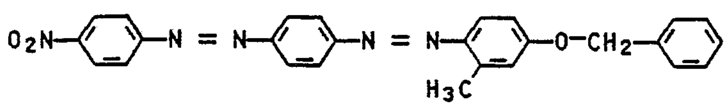

Schmp.: 200°C.

78,4 g des alkylierten Disazofarbstoffs wurden in einer Mischung aus 700 ml Wasser, 500 ml Toluol, 76,1 g Natriumsulfid und 24,7 g Ammoniumchlorid 5 Stunden zum Sieden erhitzt. Anschließend destillierte man aus dem Gemisch das Toluol ab, setzte 200 ml Methanol zu, saugte den Niederschlag ab, wusch ihn mit Methanol und dann mit Wasser und trocknete ihn. Man erhielt 68,5 g (96 % d.Th.) Aminoverbindung der Formel

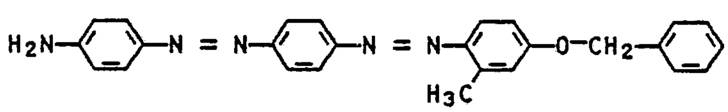

Schmp.: 205°C.

42,1 g der Aminoverbindung wurden in 500 ml einer Eisessig/Propionsäuremischung (7/2) suspendiert und unter Eiskühlung zuerst mit 30 ml einer 23 %igen Natriumnitritlösung und dann mit 25 ml konz. Salzsäure versetzt. Dann rührte man 5 Stunden bei 5°C und gab die Diazoniumsalzlösung unter Rühren zu einer Lösung aus 12,2 g 3-Ethylphenol, 8 g einer 50 %igen Natriumhydroxidlösung, 100 ml Wasser und 200 g Eis, wobei man den pH-Wert der Lösung durch Zugabe von verdünnter Natronlauge bei pH 7 hielt. Man rührte das Gemisch noch 1 Stunde bei Raumtemperatur, saugte den ausgefallenen Niederschlag ab und wusch ihn mit Wasser. Man erhielt 52,6 g (95 % d.Th.) Trisazofarbstoff der Formel

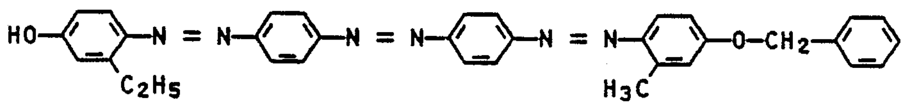

Schmp.: 180°C.

Eine Mischung aus 8,3 g dieses Trisazofarbstoffs, 2,9 g 3-(Brommethyl)heptan, 2,1 g Kaliumcarbonat, 0,2 g Kaliumjodid und 100 ml N,N-Dimethylformamid wurde 6 Stunden bei 120°C gerührt, anschließend kalt abgesaugt und der Rückstand mit wenig N,N-Dimethylformamid, dann mit Methanol und dann mit Wasser gewaschen. Man erhielt 5,9 g (59 % d.Th.) Rohfarbstoff der Formel

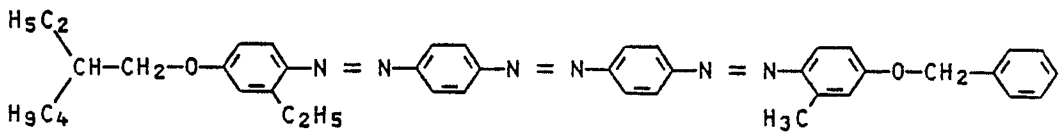

Der Farbstoff wurde durch Chromatographie über Kieselgel (Fa. Merck, Kieselgel 60, 0,063 - 0,0200 mm) mit Toluol/Essigester (40/1) als Laufmittel und anschließende Umkristallisation aus Toluol/Petroleumbenzin gereinigt.
Schmp.: 122°C.

In analoger Weise werden auch die in den folgenden Tabellen 1 bis 4 aufgeführten Farbstoffe erhalten.

Tabelle 1

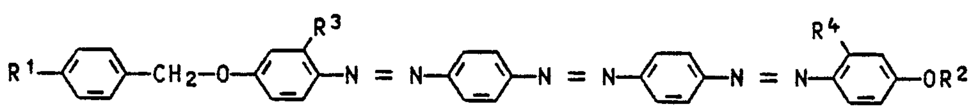

| Bsp. Nr. | $R^1$ | $R^2$ | $R^3$ | $R^4$ |
|---|---|---|---|---|
| 2 | $C_5H_{11}$ | $C_8H_{17}$ | $CH_3$ | $C_2H_5$ |
| 3 | $C_5H_{11}$ | $C_8H_{17}$ | $C_2H_5$ | $CH_3$ |
| 4 | H | $C_8H_{17}$ | $C_2H_5$ | $C_2H_5$ |
| 5 | $C_5H_{11}O$ | $C_8H_{17}$ | $C_2H_5$ | $C_2H_5$ |
| 6 | 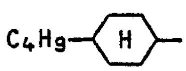 | $C_8H_{17}$ | $C_2H_5$ | $C_2H_5$ |
| 7 | H | $CH_2-CH_2(C_2H_5)C_4H_9$ | $CH_3$ | $C_3H_7$ |
| 8 | H | $CH_2-CH_2(C_2H_5)C_4H_9$ | $CH_3$ | $C_4H_9$ |

Tabelle 2

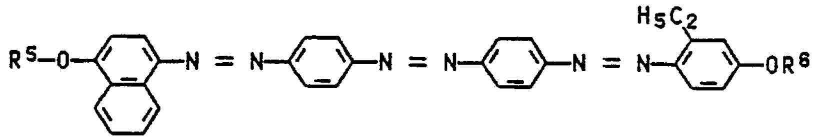

| Bsp. Nr. | $R^5$ | $R^6$ |
|---|---|---|
| 9 | 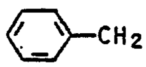 | $CH_2-CH(C_2H_5)C_4H_9$ |
| 10 | $C_4H_9(C_2H_5)CH-CH_2$ | 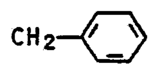 |
| 11 | 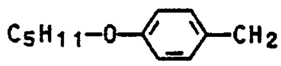 | $C_8H_{17}$ |
| 12 | 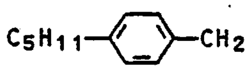 | $C_8H_{17}$ |
| 13 | 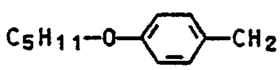 | $CH_2-CH(C_2H_5)C_4H_9$ |
| 14 | 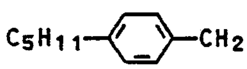 | $CH_2-CH(C_2H_5)C_4H_9$ |

Tabelle 3

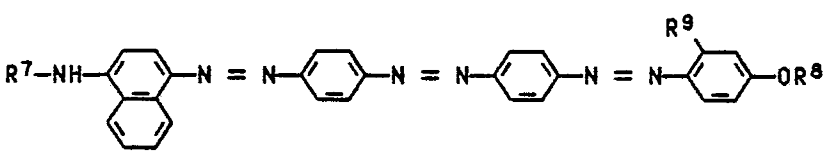

| Bsp. Nr. | $R^7$ | $R^8$ | $R^9$ |
|---|---|---|---|
| 15 | $C_{12}H_{25}$ | $C_8H_{17}$ | $C_2H_5$ |
| 16 | $C_{12}H_{25}$ | $CH_2-CH(C_2H_5)C_4H_9$ | $C_2H_5$ |
| 17 | $C_8H_{17}$ | $CH_2-CH(C_2H_5)C_4H_9$ | $C_3H_7$ |
| 18 | $C_7H_{15}$ | $CH_2-CH(C_2H_5)C_4H_9$ | $C_4H_9$ |

Tabelle 4

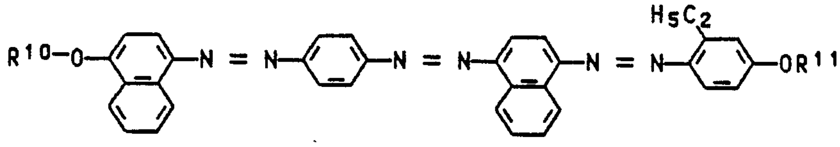

| Bsp. Nr. | $R^{10}$ | $R^{11}$ |
|---|---|---|
| 19 | 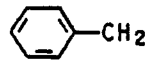 | $CH_2-CH(C_2H_5)C_4H_9$ |
| 20 | $C_4H_9(C_2H_5)CH-CH_2$ | 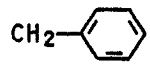 |

Beispiel Nr. 21

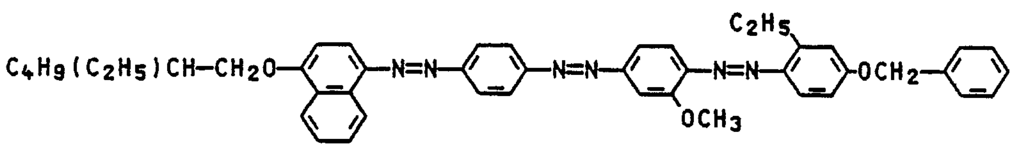

In Tabelle 5 sind für die Beispiele 1 bis 5, 9 bis 16 und 19 bis 21 jeweils der bei Raumtemperatur in ZLI 2452 der Fa. Merck gemessene Ordnungsgrad S, die in ZLI 2452 ebenfalls bei Raumtemperatur bestimmte Löslichkeit L, der Schmelzpunkt und das Absorptionsmaximum in Methylenchlorid zusammengefaßt.

Der Ordnungsgrad S wurde nach der bekannten Gleichung

$$S = \frac{CR-1}{CR+2}$$

in handelsüblichen Meßzellen mit homogener Randorientierung (Polyimid) bestimmt. Das dichroitische Verhältnis CR wurde durch Messung der Extinktionen E″ (Messung mit parallel zur Vorzugsrichtung der nematischen Phase polarisiertem Licht) und E⊥ (Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, daß E″ zwischen 1 und 2 lag. Die Messungen wurden an einem Spektralphotometer der Fa. Hitachi U 3200 durchgeführt.

In Figur 1 sind die Extinktionen E″ und E⊥ für die Verbindung des Beispiels 1 in ZLI 2452 dargestellt.

Die Löslichkeit wurde wie folgt bestimmt.

50 mg des jeweiligen Farbstoffs wurden 1 Woche bei Raumtemperatur in 1 ml Flüssigkristall eingerührt, die gesättigte Lösung vom Rückstand abzentrifugiert und die Löslichkeit durch Extinktionsvergleich ermittelt.

Die Bestimmung der Lichtstabilität der Farbstoffe im jeweiligen Flüssigkristall erfolgte durch Schnellbelichtung der Lösung in der Meßzelle im Suntest (Fa. Hanau) bei 25 °C. Die Farbstoffe zeigten, insbesondere

bei Verwendung eines UV-Schutzlackes, eine ausgezeichnete Photostabilität.

Tabelle 5

| Bsp.Nr. | Ordnungsgrad S (bei RT) | Löslichkeit L [%] (bei RT) | Schmp. [°C] | λmax [nm] ($CH_2Cl_2$) |
|---|---|---|---|---|
| 1 | 0,815 | 18,7 | 122 | 417 |
| 2 | 0,83 | 5,1 | 139 | 418 |
| 3 | 0,82 | 5,3 | 131 | 418 |
| 4 | 0,79 | 6,4 | 126 | 419 |
| 5 | 0,79 | 3,5 | 110 | 418 |
| 9 | 0,81 | 2,0 | 188 | 443 |
| 10 | 0,81 | 7,1 | 120 | 445 |
| 11 | 0,79 | 3,4 | 153 | 437 |
| 12 | 0,79 | 2,4 | 148 | 441 |
| 13 | 0,79 | 2,9 | 148 | 435 |
| 14 | 0,81 | 5,0 | 136 | 443 |
| 15 | 0,81 | 2,0 | 130 | 535 |
| 16 | 0,80 | 8,0 | 112 | 533 |
| 19 | 0,79 | 1,6 | 196 | 486 |
| 20 | 0,80 | 1,3 | 158 | 489 |
| 21 | 0,79 | 5,5 | 137 | 459 |

## Ansprüche

1. Trisazofarbstoffe der Formel I

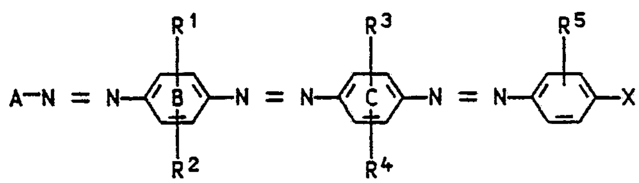

(I)

in der
$R^1$, $R^2$, $R^3$ und $R^4$ gleich oder verschieden sind und jeweils unabhängig voneinander Wasserstoff, Methyl, Ethyl, Methoxy oder Chlor,
$R^5$ $C_2$-$C_4$-Alkyl,
$C_1$-$C_{24}$-Mono-oder Dialkylamino, Monobenzylamino, Mono(phenylethyl)amino, Monophenylamino, N-($C_1$-$C_{12}$-Alkyl)-N-benzylamino, N-($C_1$-$C_{12}$-Alkyl)-N-(phenylethyl)amino oder N-($C_1$-$C_{12}$-Alkyl)-N-phenylamino, wobei die Phenylgruppen jeweils durch $C_1$-$C_{12}$-Alkyl, Cyclohexyl, 4-($C_1$-$C_{12}$-Alkyl)-cyclohexyl, $C_1$-$C_{24}$-Alkyloxy, Phenoxy oder $C_1$-$C_{24}$-Alkanoyloxy substituiert sein können, oder den Rest OR, wobei R für $C_1$-$C_{24}$-Alkyl, gegebenenfalls jeweils durch $C_1$-$C_{12}$-Alkyl, Cyclohexyl, 4-($C_1$-$C_{12}$-Alkyl)-cyclohexyl, $C_1$-$C_{24}$-Alkoxy, Phenoxy oder $C_1$-$C_{24}$-Alkanoyloxy substituiertes Benzyl oder Phenylethyl steht, und
einen Rest der Formel

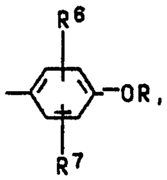 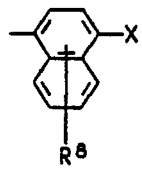 oder 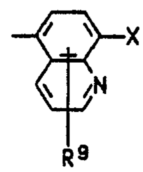 ,

bedeuten, wobei R und X jeweils die obengenannte Bedeutung besitzen und
für Wasserstoff oder $C_1$-$C_4$-Alkyl,
$R^7$ für Wasserstoff, Methyl, Ethyl, Methoxy oder Chlor,
$R^8$ für Wasserstoff, Methyl, Hydroxy oder $C_1$-$C_8$-Alkoxy und
$R^9$ für Wasserstoff oder Methyl stehen, und die Ringe B und/oder C auch benzoanelliert sein können.

2. Trisazofarbstoffe gemäß Anspruch 1, dadurch gekennzeichnet, daß A einen Rest der Formel

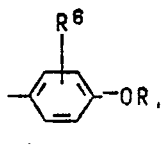 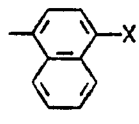 oder 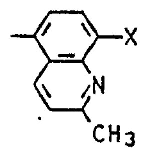

bedeutet, wobei
R, $R^6$ und X jeweils die in Anspruch 1 genannte Bedeutung besitzen.

3. Trisazofarbstoffe gemäß Anspruch 1, dadurch gekennzeichnet, daß R $C_4$-$C_{12}$-Alkyl, Benzyl oder durch $C_4$-$C_{12}$-Alkyl, Cyclohexyl, 4-($C_1$-$C_{12}$-Alkyl)-cyclohexyl oder $C_4$-$C_{12}$-Alkoxy substituiertes Benzyl bedeutet.

4. Trisazofarbstoffe gemäß Anspruch 1, dadurch gekennzeichnet, daß $R^1$, $R^2$, $R^3$, $R^4$ und $R^7$ jeweils Wasserstoff bedeuten.

5. Verwendung der Trisazofarbstoffe gemäß Anspruch 1 in flüssigkristallinen Medien sowie zum Färben von synthetischen Polymeren oder Fasern.

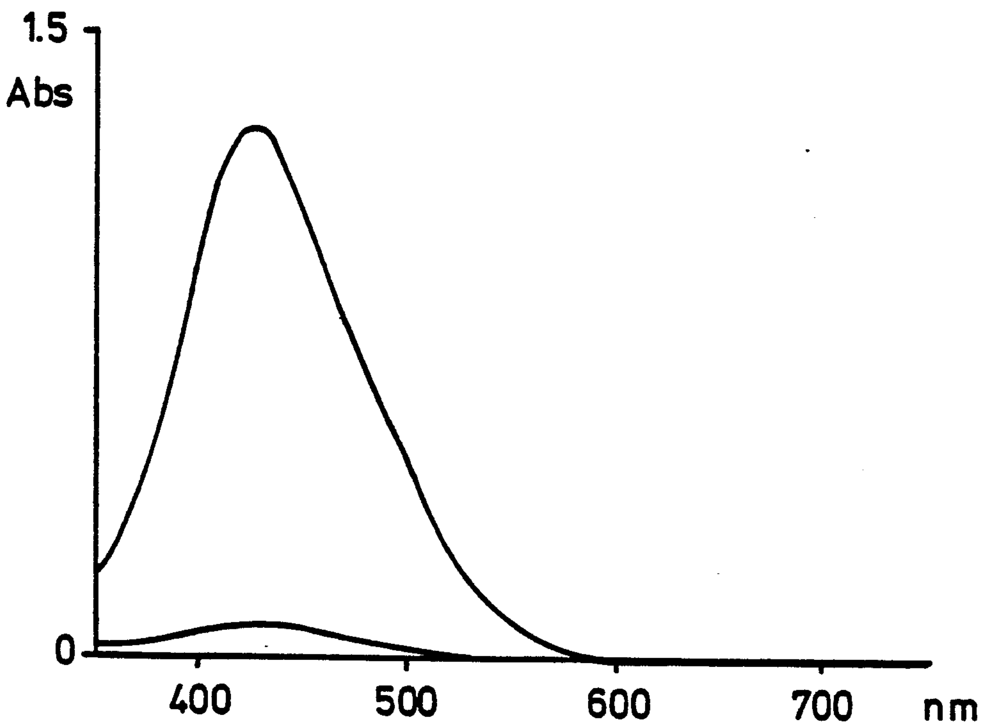
1.5
Abs
0
400
500
600
700
nm

BASF Aktiengesellschaft

BASF

BASF Aktiengesellschaft · D-6700 Ludwigshafen

Europäisches Patentamt
Erhardtstraße 27

D-8000 München 2

BRD

R 88

50150 MÜNCHEN
Empfang bestätigt
Receipt acknowledged
Accusé réception
FT

19.02.1988
Patentabteilung-C6
ZSP/D - gg5095
Dr. Karg
Tel. 0621/60 43895
Telex 17 62 157 170
Ttx 62 157 170=BASF
Tfx 0621/60 43123

EP-Anm. Nr. 87116298.8 - O.Z. 0050/38784
Trisazofarbstoffe

Leider sind wir erst jetzt auf zwei Fehler aufmerksam geworden, die sich in der obigen Anmeldung befinden.

- Auf Seite 5, Zeile 10 muß der erste Rest "$-CH(CH_3)C_4H_9$" lauten
- Auf Seite 7, Zeile 13 muß anstelle von "Natronlauge" "Natriumhydroxid" stehen.

Wir bitten dieses Versehen zu entschuldigen und fügen als Anlage die entsprechend korrigierten Seiten 5 und 7 bei.

BASF Aktiengesellschaft

i.V. Nöther ppa. Höller

i.V.Nöther ppa.Höller

Anlage 3fach

BAD ORIGINAL